# EUROPÄISCHE PATENTSCHRIFT

(11) **EP 4 145 084 B1**
(45) Veröffentlichungstag und Bekanntmachung des Hinweises auf die Patenterteilung: **08.11.2023**
(21) Anmeldenummer: 21195287.4
(22) Anmeldetag: 07.09.2021
(51) Int. Cl.: G01B 11/00

(54) **LASERTRACKERBASIERTES VERMESSUNGSSYSTEM MIT INERTIALER MESSEINHEIT**
LASER TRACKER BASED MEASUREMENT SYSTEM WITH INERTIAL MEASUREMENT UNIT
SYSTÈME DE MESURE BASÉ SUR UN SUIVEUR LASER AVEC UNITÉ DE MESURE INERTIELLE

(43) Veröffentlichungstag der Anmeldung: 08.03.2023
(73) Patentinhaber: LEICA GEOSYSTEMS AG, 9435 Heerbrugg (CH)
(72) Erfinder: STEINER, Markus, 5722 Gränichen (CH); KWIATKOWSKI, Tomasz, CH-5054 Moosleerau (CH); STIGWALL, Johan, CH-9008 St. Gallen (CH)
(74) Vertreter: Kaminski Harmann

(56) Entgegenhaltungen:
- WO-A1-2021/069079
- US-A1- 2014 046 589
- YANG LINGHUI ET AL: "Enhanced 6D measurement by integrating an Inertial Measurement Unit (IMU) with a 6D sensor unit of a laser tracker", OPTICS AND LASERS IN ENGINEERING, ELSEVIER, AMSTERDAM, NL, Bd. 126, 24. Oktober 2019 (2019-10-24), XP085927912, ISSN: 0143-8166, DOI: 10.1016/J.OPTLASENG.2019.105902 [gefunden am 2019-10-24]

## Beschreibung

### -FACHGEBIET DER ERFINDUNG-

Die Erfindung betrifft ein lasertrackerbasiertes Vermessungssystem mit einem Messhilfsmittel und einer Messhilfsmittelerfassungseinheit zur Erfassung und Verfolgung des Messhilfsmittels. Das Vermessungssystem ist dazu konfiguriert Koordinaten von mittels des Messhilfsmittels abgetasteten Punkten einer Oberfläche zu bestimmen.

### -HINTERGRUND-

In der Objektvermessungstechnik sind unterschiedliche Vermessungssysteme bekannt, zur Bestimmung von 3D-Koordinaten von zu vermessenden Punkten einer Objektoberfläche, sogenannten Oberflächenpunkten. Jedes System basiert auf der Verwendung eines spezifischen Messhilfsmittels, das einen Messkopf/Sensor aufweist und mittels dessen eine Objektoberfläche abgetastet wird. Dabei gibt weitestgehend die Vermessungsaufgabe und insbesondere darin definierte Anforderungen an die Messgenauigkeit/-geschwindigkeit die Wahl des Messhilfsmittels vor. Es gibt taktil oder berührungslos oder taktil und berührungslos abtastende Messhilfsmittel. Taktil abtastende Messhilfsmitel weisen beispielsweise einen stiftförmigen Messtaster mit einer an einem Ende befestigten Rubinkugel auf. Die Rubinkugel wird mit einem zu vermessenden Punkt einer Objektoberfläche in Berührung gebracht und basierend darauf werden die 3D-Koordinaten dieses Punktes vom Vermessungssystem ermittelt. Berührungslos abtastende Messhilfsmittel wie beispielsweise Laserscanner weisen eine Strahlquelle zur Aussendung von Messstrahlung auf, wobei ein zu vermessender Punkt einer Objektoberfläche von der Messstrahlung angestrahlt und Messstrahlung von diesem angestrahlten Punkt reflektiert wird und basierend darauf die 3D-Koordinaten dieses Punktes vom Vermessungssystem ermittelt werden.

Solche taktil und/oder berührungslos abtastenden Messhilfsmittel können beispielsweise im Zusammenwirken mit einer Koordinatenmessmaschine (CMM), einer automatisch geführten kinematischen Kette oder einem Roboterarm verwendet werden oder können dazu ausgelegt sein, um von einem Benutzer händisch geführt zu werden. WO 2021/069079 A1 und US 2014/046589 A1 zeigen Vermessungssysteme gemäß des Oberbegriffs des Anspruchs 1.

Für eine hochpräzise Bestimmung von 3D-Koordinaten von abgetasteten Punkten einer Oberfläche ist eine hochpräzise Bestimmung der Position und typischerweise der Orientierung des Messhilfsmittels von zentraler Bedeutung.

### -BESCHREIBUNG DER ERFINDUNG-

Es ist deshalb eine Aufgabe der Erfindung ein Vermessungssystem bereitzustellen, das eine hochpräzise Bestimmung von 3D-Koordinaten von zu vermessenden Oberflächenpunkten ermöglicht.

Es ist eine weitere Aufgabe der Erfindung ein Vermessungssystem bereitzustellen, das flexibel eingesetzt werden kann, beispielsweise bei dem das Messhilfsmittel maschinengeführt und/oder händisch geführt werden kann und eine effiziente Vermessung von Oberflächenpunkten ermöglicht.

Es ist eine weitere Aufgabe der Erfindung ein Vermessungssystem bereitzustellen, das eine einfache und intuitive Bedienung ermöglicht.

Das erfindungsgemässe Vermessungssystem ist lasertrackerbasiert und zur lasertrackerbasierten Bestimmung von Koordinaten, insbesondere 3D-Koordinaten, von zu vermessenden Punkten einer Oberfläche ausgelegt.

Dazu hat das erfindungsgemässe Vermessungssystem ein Messhilfsmittel zur Abtastung der zu vermessenden Punkte der Oberfläche, insbesondere ist das Messhilfsmittel ein Laserscanner.

Das Messhilfsmittel weist eine inertiale Messeinheit (IMU) zur Ermittlung von Bewegungsdaten des Messhilfsmittels, einen Reflektor, und mehrere Messhilfsmittelmarkierungen auf, wobei die mehreren Messhilfsmittelmarkierungen in einer bestimmten Positionsrelation zueinander und ein Muster bildend am Messhilfsmittel angeordnet sind, sodass durch das Vermessungssystem mittels des Reflektors eine Position und mittels der Messhilfsmittelmarkierungen bzw. mittels des Musters eine Orientierung des Messhilfsmittels bestimmbar ist.

Des Weiteren weist das Vermessungssystem ein Entfernungsmessmodul, ein Strahlmodul zur richtungsvariablen Aussendung von Erfassungsstrahlung, und eine ausrichtbare Messhilfsmittelerfassungseinheit, die kommunikativ mit dem Messhilfsmittel verbindbar ist und ein Erfassungssichtfeld hat, auf.

Dabei ist die Messhilfsmittelerfassungseinheit konfiguriert zur Erfassung und Verfolgung des Messhilfsmittels, basierend auf vom Reflektor reflektierter Erfassungsstrahlung, zur Erfassung der Messhilfsmittelmarkierungen, und zur Bestimmung von Koordinaten der zu vermessenden Punkte der Oberfläche basierend auf der Erfassung und Verfolgung des Messhilfsmittels, der Erfassung der Messhilfsmittelmarkierungen, einer mittels Entfernungsmessmodul bestimmten Entfernung zum Messhilfsmittel, und der Abtastung der zu vermessenden Punkte der Oberfläche durch das Messhilfsmittel.

Dabei ist die Messhilfsmittelerfassungseinheit ferner dazu konfiguriert basierend auf von der IMU ermittelten Bewegungsdaten des Messhilfsmittels Koordinaten der zu vermessenden Punkte der Oberfläche zu bestimmen.

Ferner ist das Vermessungssystem dazu konfiguriert, basierend auf von der IMU ermittelten Bewegungsdaten des Messhilfsmittels die Messhilfsmittelerfassungseinheit so auszurichten, dass der Reflektor innerhalb des Erfassungssichtfelds ist.

Das Messhilfsmittel kann beispielsweise ein Laserscanner sein, der berührungslos mittels Messstrahlung die zu vermessenden Punkte der Oberfläche abtastet. Der Laserscanner kann beispielsweise basierend auf dem Prinzip der Triangulation eine Entfernung vom Messhilfsmittel zu einem zu vermessenden Punkt der Oberfläche messen. Das Messhilfsmittel kann auch ein Weisslichtscanner sein der eine Entfernung vom Messhilfsmittel zu einem zu vermessenden Punkt der Oberfläche misst. Das Messhilfsmittel kann auch ein nicht scannendes Messhilfsmittel sein zur berührungslosen Messung einer Entfernung vom Messhilfsmittel zu einem zu vermessenden Punkt der Oberfläche.

Das Messhilfsmittel kann auch ein taktil abtastendes Messhilfsmittel sein, wobei dann zur Messung zumindest ein Teil des Messhilfsmittels mit einem zu vermessenden Punkt der Oberfläche in Kontakt gebracht wird. Durch das in Kontakt bringen sind Koordinaten eines zu vermessenden Punkts bestimmbar.

Die inertiale Messeinheit (IMU) ist dazu ausgelegt Bewegungsdaten zu ermitteln bei der Bewegung des Messhilfsmittels, die die Bewegung des Messhilfsmittels im Raum beschreibbar machen. Diese Bewegungsdaten können beispielsweise eine Position des Messhilfsmittels betreffen und/oder die räumliche Ausrichtung des Messhilfsmittels. Typischerweise weist die IMU dazu mehrere Beschleunigungssensoren und Drehratensensoren auf. Basierend auf den Bewegungsdaten kann beispielsweise eine Orientierung des Messhilfsmittels in bis zu drei Freiheitsgraden bestimmbar sein.

Der Reflektor kann ein Retroreflektor sein. Der Reflektor, insbesondere der Retroreflektor, ist dazu ausgelegt auf ihn einfallende Erfassungsstrahlung in Richtung Strahlquelle zu reflektieren. Die von dem Reflektor reflektierte Erfassungsstrahlung macht die Position des Messhilfsmittels für die Messhilfsmittelerfassungseinheit, beispielsweise eines Lasertrackers, bestimmbar.

Beispielsweise kann der Reflektor mit Laserstrahlung eines Lasertrackers angestrahlt werden, welche dann von dem Reflektor in Richtung Lasertracker reflektiert wird. Basierend auf der Detektion der reflektierten Laserstrahlung kann der Lasertracker bzw. das Vermessungssystem die genauen Winkel unter welchen der Reflektor angestrahlt wird bestimmen. Basierend auf vom Reflektor reflektierter Laserstrahlung kann ebenfalls eine Entfernung zum Reflektor für einen Lasertracker bzw. ein Entfernungsmessmodul bestimmbar sein. Basierend auf der Winkelinformation betreffend die Richtung der ausgestrahlten Laserstrahlung und der bestimmten Entfernung zum Reflektor ist die Position des Reflektors und somit des Messhilfsmittels für den Lasertracker bzw. die Messhilfsmittelerfassungseinheit bestimmbar.

Die, insbesondere visuellen, Messhilfsmittelmarkierungen sind in definierter räumlicher Beziehung zueinander angeordnet und formen dadurch ein spezifisches Muster, welches dazu dient, die Orientierung des Messhilfsmittels für die Messhilfsmittelerfassungseinheit, beispielsweise eines Lasertrackers, bestimmbar zu machen.

Die Messhilfsmittelmarkierungen können beispielsweise Lichtpunkte sein. Diese Lichtpunkte können beispielsweise von einer Lichtquelle an den jeweiligen Punkten oder mittels Reflektion von dafür vorgesehenem Licht an den jeweiligen Punkten erzeugt werden.

Ebenso kann das Licht einer einzelnen Lichtquelle über Lichtleiter zu den jeweiligen Punkten geleitet werden.

Solche Lichtpunkte erzeugen dann ein orientierungsspezifisches Muster, welches von der Messhilfsmittelerfassungseinheit zur Bestimmung der Orientierung des Messhilfsmittels verwendet werden kann. Das orientierungs-spezifische Muster kann beispielsweise ein Lichtpunktmuster sein.

Zur Bestimmung der Orientierung des Messhilfsmittels kann das Lichtpunktmuster zur Auswertung auf eine Ebene projiziert bzw. abgebildet werden. Die Bestimmung der Orientierung des Messhilfsmittels basiert dann darauf, dass sich in Abhängigkeit der Orientierung das Muster aus den Lichtpunktprojektionen orientierungsspezifisch ändert. Beispielsweise nähern sich die Lichtpunktprojektionen zweier Lichtpunkte einander an oder entfernen sich voneinander bei einer Rotation des Messhilfsmittels um eine Achse, welche quer zu der Verbindungsachse, welche die zwei Lichtpunkte miteinander verbindet angeordnet ist und gleichzeitig in einer zur Projektionsebene parallel angeordneten Ebene liegt.

Dadurch ist mittels des Reflektors eine Position und mittels der Messhilfsmittelmarkierungen eine Orientierung des Messhilfsmittels durch die Messhilfsmittelerfassungseinheit bestimmbar.

Das Entfernungsmessmodul ist dazu ausgelegt mittels Entfernungsmessstrahlung eine Entfernung zum Messhilfsmittel zu messen. Das Entfernungsmessmodul kann laserbasiert sein und dazu ausgelegt sein die Entfernung basierend auf dem Prinzip der Laufzeitmessung oder auf einem interferometrischen Prinzip zu bestimmen. Typischerweise wird die Entfernungsmessstrahlung auf den Reflektor ausgerichtet und von diesem zumindest teilweise zum Entfernungsmessmodul zurückreflektiert. Das Entfernungsmessmodul ist dazu ausgelegt basierend darauf die Entfernung zum Reflektor bzw. zum Messhilfsmittel zu bestimmen.

Das Strahlmodul ist dazu ausgelegt Erfassungsstrahlung richtungsvariabel auszusenden. Die Erfassungsstrahlung kann Laserstrahlung sein. Das Strahlmodul kann dazu ausgelegt sein die Erfassungsstrahlung gleichzeitig in mehrere Richtungen die einen bestimmten Winkelbereich bestimmen auszustrahlen. Das Vermessungssystem ist so konfiguriert, dass wenn die Erfassungsstrahlung den Reflektor anstrahlt, diese vom Reflektor zur Messhilfsmittelerfassungseinheit zurückreflektiert wird. Die Messhilfsmittelerfassungseinheit ist dann dazu ausgelegt die reflektierte Erfassungsstrahlung zu detektieren und das Messhilfsmittel basierend darauf zu erfassen und zu verfolgen. Verfolgen betrifft dabei das fortlaufende Ausrichten bzw. Nachführen des Erfassungssichtfelds, sodass der Reflektor innerhalb des Erfassungssichtfelds ist bzw. bleibt.

Die Erfassung und Verfolgung des Messhilfsmittels basiert somit auf der Detektion von vom Reflektor reflektierter Erfassungsstrahlung.

Reflektoren, insbesondere Retroreflektoren, haben oft einen sogenannten wirksamen Einfallswinkelbereich, wobei innerhalb dieses Einfallswinkelbereichs einfallende Strahlung reflektiert, insbesondere retroreflektiert wird. Strahlung welche mit einem Winkel ausserhalb des für Reflektion wirksamen Einfallswinkelbereichs einfällt, wird nicht wie gewünscht oder gar nicht reflektiert, insbesondere nicht retro-reflektiert. Zum Beispiel sind typische Retroreflektoren für senkrechten Strahlungseinfall ausgelegt, wobei sie jedoch auch für einen Einfall von +/- 45 - 60 Grad zur Senkrechten retroreflektiv wirken. In anderen Worten, auch der Reflektor hat ein sogenanntes (wirksames) "Sichtfeld".

Die Erfassung und Verfolgung des Messhilfsmittels ist somit möglich, wenn der Reflektor im Erfassungssichtfeld der Messhilfsmittelerfassungseinheit liegt und eine sogenannte (wirksame) Sichtverbindung zwischen Strahlmodul, Messhilfsmittelerfassungseinheit und Reflektor besteht, nämlich wobei das Strahlmodul, die Messhilfsmittelerfassungseinheit und der Reflektor relativ zueinander derart angeordnet und ausgerichtet sind, dass eine Detektion von vom Reflektor reflektierter Erfassungsstrahlung des Strahlmoduls möglich ist.

Die Messhilfsmittelerfassungseinheit ist ferner dazu konfiguriert, die Messhilfsmittelmarkierungen zu erfassen. Beispielsweise, ist die Messhilfsmittelerfassungseinheit dazu ausgelegt das durch die Messhilfsmittelmarkierungen gebildete Muster zu erfassen und fortlaufend auszuwerten. Basierend auf dieser Auswertung ist dann die Orientierung des Messhilfsmittels bestimmbar.

Des Weiteren ist die Messhilfsmittelerfassungseinheit dazu konfiguriert basierend auf einer mittels des Entfernungsmessmoduls gemessenen Entfernung und auf mittels des Vermessungssystems bestimmter Winkelinformation betreffend die Richtung der ausgestrahlten Entfernungsmessstrahlung eine Position und basierend auf der Erfassung der Messhilfsmittelmarkierungen eine Orientierung des Messhilfsmittels zu bestimmen. Basierend auf der Position und Orientierung des Messhilfsmittels und der durch das Messhilfsmittel bestimmten Entfernung zu einem zu vermessenden Punkt einer Oberfläche sind die Koordinaten dieses Punktes durch die Messhilfsmittelerfassungseinheit bestimmbar.

Erfindungsgemäss ist die Messhilfsmittelerfassungseinheit ferner dazu konfiguriert die Koordinaten der zu vermessenden Punkte auch basierend auf von der IMU ermittelten Bewegungsdaten des Messhilfsmittels zu bestimmen. Dabei können die Bewegungsdaten eine Position und/oder eine Orientierung des Messhilfsmittels betreffen. Somit ist das erfindungsgemässe Vermessungssystem dazu ausgelegt Bewegungsdaten die von der IMU ermittelt werden zur Bestimmung der Koordinaten zu verwenden. Dadurch kann das Vermessungssystem flexibel und effizient eingesetzt werden, weil eine gewisse Datenredundanz vorhanden ist.

Das erfindungsgemässe Vermessungssystem ist des Weiteren dazu ausgelegt die Bewegungsdaten die von der IMU ermittelt werden zu nutzen um die Messhilfsmittelerfassungseinheit, insbesondere fortlaufend, so auszurichten, dass der Reflektor innerhalb des Erfassungssichtfelds ist. Dadurch ist das Vermessungssystem effizient nutzbar, weil der Reflektor stets im Erfassungssichtfeld haltbar ist und somit erfassbar ist sobald eine Sichtverbindung zwischen Strahlmodul, Messhilfsmittelerfassungseinheit und Reflektor besteht. Sichtverbindung ist hierbei so zu verstehen, dass das Strahlmodul, die Messhilfsmittelerfassungseinheit und der Reflektor relativ zueinander derart angeordnet und ausgerichtet sind, dass eine Detektion von vom Reflektor reflektierter Erfassungsstrahlung des Strahlmoduls möglich ist (siehe oben).

Gemäss einer vorteilhaften Ausführungsform des Vermessungssystems ist dieses so konfiguriert, dass im Falle, dass der Reflektor innerhalb des Erfassungssichtfelds ist und eine Sichtverbindung zwischen dem Strahlmodul, der Messhilfsmittelerfassungseinheit und dem Reflektor besteht, das Messhilfsmittel zumindest basierend auf vom Reflektor reflektierter Erfassungsstrahlung erfassbar und verfolgbar ist, und im Falle, dass entweder der Reflektor ausserhalb des Erfassungssichtfeldes ist oder keine Sichtverbindung zwischen dem Strahlmodul, der Messhilfsmittelerfassungseinheit und dem Reflektor besteht, das Messhilfsmittel basierend auf von der IMU ermittelten Bewegungsdaten des Messhilfsmittels erfassbar und verfolgbar ist.

Letzteres kann Fälle betreffen in denen beispielsweise Sichtlinie zwischen Reflektor und Messhilfsmittelerfassungseinheit von einem Objekt unterbrochen wird und/oder der Reflektor nicht im Erfassungssichtfeld liegt.

Dies ermöglicht einen flexiblen und zu einem grossen Teil unterbruchsfreien Einsatz des Vermessungssystems, da das Erfassen und Verfolgen des Messhilfsmittels auch dann möglich ist, wenn keine Sichtverbindung zwischen dem Reflektor, dem Strahlmodul und der Messhilfsmittelerfassungseinheit besteht und auch dann Koordinaten der zu vermessenden Punkte bestimmbar sind.

Gemäss einer vorteilhaften Ausführungsform des Vermessungssystems wird der Reflektor von mehreren Reflektoren gebildet und die mehreren Reflektoren sind an einem äusseren Bereich des Messhilfsmittels und über diesen verteilt mit einer bestimmten Positionsrelation zueinander angeordnet.

Dabei ist das Vermessungssystem dazu konfiguriert, im Falle, dass auf einen ersten Zustand, in welchem einer der mehreren Reflektoren innerhalb des Erfassungssichtfelds ist und eine Sichtverbindung zwischen dem Strahlmodul, der Messhilfsmittelerfassungseinheit und dem einen der mehreren Reflektor besteht, ein Zustand folgt in dem entweder der eine der mehreren Reflektoren ausserhalb des Erfassungssichtfeldes ist oder keine Sichtverbindung zwischen dem Strahlmodul, der Messhilfsmittelerfassungseinheit und dem einen der mehreren Reflektoren besteht, die Messhilfsmittelerfassungseinheit basierend auf von der IMU ermittelten Bewegungsdaten des Messhilfsmittels so auszurichten, dass eine Zeitdauer bis einer der mehreren Reflektoren innerhalb des Erfassungssichtfelds ist und eine Sichtverbindung zwischen dem Strahlmodul, der Messhilfsmittelerfassungseinheit und dem einen der mehreren Reflektoren besteht minimiert wird bzw. so kurz wie möglich ist.

Ein Zustand der auf den ersten Zustand folgt, im folgenden Unterbruchzustand genannt, kann dabei beispielsweise ein Zustand sein, in welchem keiner der mehreren Reflektoren eine Sichtverbindung zum Strahlmodul und der Messhilfsmittelerfassungseinheit aufweist und/oder in welchem keiner der mehreren Reflektoren im Erfassungssichtfeld ist.

Folgt ein solcher Unterbruchzustand auf den ersten Zustand, dann kann das Vermessungssystem so konfiguriert sein, dass mittels der Bewegungsdaten die Messhilfsmittelerfassungseinheit fortlaufend so ausgerichtet wird, dass einer der mehreren Reflektoren innerhalb einer minimierten Zeitdauer wieder innerhalb des Erfassungssichtfelds ist und/oder wieder eine Sichtverbindung zum Strahlmodul und zur Messhilfsmittelerfassungseinheit besteht.

Dazu ist das Vermessungssystem beispielsweise konfiguriert, um basierend auf den Bewegungsdaten der IMU, insbesondere einem zeitlichen Verlauf der Bewegungsdaten, eine Prädiktion einer zukünftigen Position und Orientierung des Messhilfsmittels zu bestimmen, wobei die Prädiktion automatisch der Messhilfsmittelerfassungseinheit bereitgestellt wird. Die Messhilfsmittelerfassungseinheit ist ferner konfiguriert, bei Auftreten des Unterbruchzustands das Erfassungssichtfeld automatisch auf die Prädiktion auszurichten.

Beispielsweise weist die Messhilfsmittelerfassungseinheit ferner eine automatische Zielsuchfunktionalität auf, konfiguriert zur automatischen Zielsuche im Umfeld einer initialen Ausrichtung des Erfassungssichtfelds, wobei die Prädiktion beispielsweise eine Zeitschätzung beinhaltet, wann das Messhilfsmittel die zukünftige Position und Orientierung einnehmen wird und die Zielsuchfunktionalität basierend auf der Zeitschätzung automatisch getriggert wir.

Gemäss einer Ausführungsform des Vermessungssystems sind die Messhilfsmittelmarkierungen dazu ausgestaltet Lichtstrahlung auszusenden und/oder zu reflektieren.

Beispielsweise können die Messhilfsmittelmarkierungen Lichtpunkte sein die mittels Light-Emitting-Diode (LED) Technologie erzeugt sind. Die Messhilfsmittelmarkierungen können auch Reflektoren sein, die dazu ausgelegt sind Strahlung zu reflektieren, sodass die reflektierte Strahlung von der Messhilfsmittelerfassungseinheit als Muster detektierbar und auswertbar ist.

Die Verwendung von LED-Technologie ermöglicht eine variable Anpassung des Lichtpunktmusters, beispielsweise mittels variabler Einstellung von Lichtpunktintensitäten.

Gemäss einer Ausführungsform des Vermessungssystems weist die Messhilfsmittelerfassungseinheit einen Detektor auf mit einem strahlungsempfindlichen Sensor. Dabei ist die Messhilfsmittelerfassungseinheit dazu konfiguriert mittels des strahlungsempfindlichen Sensors das Messhilfsmittel zu erfassen und zu verfolgen, und auch die Messhilfsmittelmarkierungen zu erfassen.

Durch die Verwendung desselben strahlungsempfindlichen Sensors für die Erfassung und Verfolgung des Messhilfsmittels und die Erfassung der Messhilfsmittelmarkierungen ermöglicht die Realisierung des Vermessungssystems in einfacher und kompakter Bauweise, wodurch eine effiziente Vermessung bereitgestellt wird.

Gemäss einer vorteilhaften Ausführungsform des Vermessungssystems ist die Messhilfsmittelerfassungseinheit dazu konfiguriert eine Position und Orientierung des Messhilfsmittels alternativ sowohl mittels der von der IMU ermittelten Bewegungsdaten des Messhilfsmittels, als auch mittels einer Kombination aus mittels des Reflektors, mittels der Messhilfsmittelmarkierungen und mittels der von der IMU ermittelten Bewegungsdaten des Messhilfsmittels, zu bestimmen.

Beispielsweise kann die Bestimmung einer Position und Orientierung des Messhilfsmittels mittels einer Kombination bedeuten, dass die Position und Orientierung des Messhilfsmittels mittels des Reflektors und mittels der Messhilfsmittelmarkierungen bestimmbar ist.

Beispielsweise kann die Bestimmung einer Position und Orientierung des Messhilfsmittels mittels einer Kombination bedeuten, dass die Position und Orientierung des Messhilfsmittels mittels des Reflektors und mittels der von der IMU ermittelten Bewegungsdaten des Messhilfsmittels bestimmbar ist.

Beispielsweise kann die Bestimmung einer Position und Orientierung des Messhilfsmittels mittels einer Kombination bedeuten, dass die Position und Orientierung des Messhilfsmittels mittels der Messhilfsmittelmarkierungen und mittels der von der IMU ermittelten Bewegungsdaten des Messhilfsmittels bestimmbar ist.

Diese Kombinierbarkeit ermöglicht eine flexible Bestimmung der Position und Orientierung des Messhilfsmittels unter Benutzung von redundanten Daten. Dadurch wird auch eine effizientere Vermessung ermöglicht die weniger unterbruchsanfällig ist.

Gemäss einer Ausführungsform des Vermessungssystems ist die Messhilfsmittelerfassungseinheit dazu konfiguriert basierend auf einem Erfassungskriterium die Orientierung und Position des Messhilfsmittels, mittels der von der IMU ermittelten Bewegungsdaten des Messhilfsmittels, oder mittels einer Kombination aus mittels des Reflektors, mittels der Messhilfsmittelmarkierungen und mittels der von der IMU ermittelten Bewegungsdaten des Messhilfsmittels, zu bestimmen.

Gemäss einer Ausführungsform des Vermessungssystems betrifft das Erfassungskriterium mindestens einen der folgenden Zustände: Das Messhilfsmittel ist vollständig mittels des Reflektors und der Messhilfsmittelmarkierungen erfassbar, das Messhilfsmittel ist zumindest teilweise mittels des Reflektors und der Messhilfsmittelmarkierungen erfassbar, das Messhilfsmittel ist zumindest teilweise mittels des Reflektors oder der Messhilfsmittelmarkierungen erfassbar, und es besteht keine Sichtverbindung zwischen dem Reflektor, dem Strahlmodul und der Messhilfsmittelerfassungseinheit, und Sichtlinien zwischen den Messhilfsmittelmarkierungen und der Messhilfsmittelerfassungeinheit sind unterbrochen (die Messhilfmittelmarkierungen sind für die Messhilfsmittelerfassungseinheit nicht sichtbar).

Dadurch wird ermöglicht, dass situationsabhängig die Position und Orientierung des Messhilfsmittels mittels der geeigneten Mittel bestimmt wird. Dies ermöglicht wiederum einen flexiblen Einsatz des Vermessungssystems auch in Situationen, in welchen beispielsweise keine Sichtverbindung zum Reflektor besteht und/oder die Messhilfsmittelmarkierungen verdeckt sind. Oder auch in Situationen in welchen sich der Reflektor und/oder die Messhilfsmittelmarkierungen ausserhalb des Erfassungssichtfelds befinden.

Gemäss einer Ausführungsform des Vermessungssystems ist die Messhilfsmittelerfassungseinheit dazu konfiguriert die Position und/oder Orientierung des Messhilfsmittels mittels Reflektor und/oder Messhilfsmittelmarkierungen zu ersten Zeitpunkten, und mittels der von der IMU ermittelten Bewegungsdaten zu zweiten Zeitpunkten zu bestimmen, wobei zumindest ein Teil der zweiten Zeitpunkte zeitlich zwischen den ersten Zeitpunkten liegt.

Die unterschiedlichen Ansätze, wobei ein Ansatz auf der Orientierungs- und/oder Positionsbestimmung mittels Reflektor und/oder Messhilfsmittelmarkierungen basiert und ein anderer Ansatz auf der Orientierungs- und/oder Positionsbestimmung mittels von der IMU ermittelten Bewegungsdaten des Messhilfsmittels basiert, zur Bestimmung der Position und/oder Orientierung des Messhilfsmittels sind aufeinander abstimmbar sind, sodass eine Anzahl vermessbarer Punkte pro Zeiteinheit optimierbar ist. Dadurch wird ein zeitlich hochaufgelöstes und effizientes Vermessen ermöglicht.

Gemäss einer vorteilhaften Ausführungsform des Vermessungssystems ist die Messhilfsmittelerfassungseinheit dazu konfiguriert die Orientierung des Messhilfsmittels mittels der Messhilfsmittelmarkierungen und der von der IMU ermittelten Bewegungsdaten zu bestimmen, wobei die Messhilfsmittelerfassungseinheit dazu konfiguriert ist die Orientierung basierend auf über ein erstes Zeitintervall gemittelten Messwerten zur Bestimmung der Orientierung mittels Messhilfsmittelmarkierungen, und über ein zweites Zeitintervall gemittelten Messwerten zur Bestimmung der Orientierung mittels der von der IMU ermittelten Bewegungsdaten zu bestimmen.

Typischerweise werden Messwerte gemittelt um ein Messwertrauschen, das auf zufälligen Messwertabweichungen basiert, und dadurch die Genauigkeit der Messung zu kontrollieren. Weil die Orientierung des Messhilfsmittels mittels zweier Ansätze bestimmbar ist können die Messwerte eines jeden Ansatzes gemittelt werden, auch unabhängig von der Mittelung der Messewerte des jeweiligen anderen Ansatzes, um für den jeweiligen Ansatz das Messwertrauschen zu kontrollieren. Eine Kombination dieser Ansätze mit jeweils gemittelten Messwerten ermöglicht eine hochpräzise Bestimmung von Koordinaten von zu vermessenden Punkten auch in Fällen, in welchen das Messhilfsmittel händisch geführt wird.

Gemäss einer Ausführungsform des Vermessungssystems ist die Messhilfsmittelerfassungseinheit ferner dazu konfiguriert mittels der IMU ermittelte Bewegungsdaten basierend auf mittels des Reflektors und/oder der Messhilfsmittelmarkierungen bestimmten Positionen und/oder Orientierung fortlaufend zu kalibrieren.

Typischerweise sind die Messwerte einer IMU mit einer systematischen Abweichung behaftet. Beispielsweise müssen die Offsets der IMU-Sensoren und ihre Skalierungsfaktoren fortlaufend kalibriert werden. Um eine systematische Abweichung zu kontrollieren kann die IMU kalibriert und in bestimmten Zeitintervallen re-kalibriert werden. Weil die Position und/oder die Orientierung des Messhilfsmittels mittels des IMU-Ansatzes und auch mittels des Reflektor-und-Messhilfsmittelmarkierungs-Ansatzes bestimmbar ist, können die mittels des Reflektor-und-Messhilfsmittelmarkierungs-Ansatzes bestimmten Positionen und Orientierungen des Messhilfsmittels zur Kalibrierung, insbesondere zur fortlaufenden Rekalibrierung, der IMU verwendet werden, beispielsweise zur fortlaufenden Kalibrierung von IMU-Sensor-Offsets und zugehörigen Skalierungsfaktoren. Dadurch wird ein flexibler Einsatz des Vermessungssystems ermöglicht.

Die IMU und Kalibrationsdaten bzgl. Position und/oder Orientierung des Messhilfsmittels, sogenannte Absolutdaten, werden beispielsweise unter Verwendung eines Zustandsschätzungsfilters wie etwa eines Kalman-Filters zusammengeführt. Mit dieser Art von Filter werden die 6DOF-Pose des Messhilfsmittels sowie interne Parameter wie IMU-Offsets mithilfe eines statistischen dynamischen Modells geschätzt. Für jeden Sensormesswert wird das Modell entsprechend aktualisiert, wobei sowohl der Sensormesswert, seine Unsicherheit als auch eine Schätzung der Dynamik des Messhilfsmittels berücksichtigt werden. So wird die Fusion verschiedener Sensortypen ermöglicht, möglicherweise mit unterschiedlichen Messraten, während die Stärken jedes Sensors ausgenutzt werden. Die IMU bleibt kontinuierlich kalibriert, und das Hochfrequenzrauschen des Messsystems wird gedämpft und durch die weniger verrauschten, aber driftanfälligeren IMU-Daten ersetzt.

Wenn das IMU-Rauschen niedrig genug ist, kann das stochastische Rauschen des Absolutsystems (z.B. durch Luftturbulenzen) nahezu vollständig eliminiert werden, wodurch ein Signal bereitgestellt wird, das hauptsächlich durch die systematischen Fehler des Absolutsystems begrenzt wird. In vielen Fällen kann dieses Signal während der Bewegung ohne weitere Mittelwertbildung mit ähnlicher Genauigkeit wie eine statische Messung mit Mittelwertbildung in einem System ohne IMU verwendet werden. Dadurch werden beispielsweise schnellere taktile Messungen ermöglicht, da das Messhilfsmittel während der Messung nicht längere Zeit (z.B. 3 Sekunden) stillgehalten werden muss. Diese lange Mittelungszeit ist hauptsächlich auf Luftturbulenzen zurückzuführen, die auf einer relativ "langsamen" Zeitskala schwanken. Somit kann eine Tracking-Genauigkeit mit scannenden Messhilfsmitteln erreicht werden, welche zumindest so gut ist wie die Tracking-Genauigkeit eines statischen Messhilfsmittels.

Durch das Zusammenführen von Absolutmessungen, z.B. durchgeführt mit 100 Hz, mit IMU-Daten, z.B. erfasst mit 1 kHz, ist es möglich, Bewegungen mit einer um eine Größenordnung schnelleren Dynamik zu verfolgen, ohne an absoluter Genauigkeit zu verlieren. Die IMU erlaubt somit, das absolute 6DOF-System mit einer niedrigeren Framerate zu bestimmen.

Wird ein einfacher Sensorfusionsfilter verwendet, welcher beispielsweise nur die Orientierung des Messhilfsmittels schätzt von der IMU und den Messhilfsmittelmarkierungen schätzt, während die absoluten Positionen vom Reflektor ohne Modifikation verwendet werden, könnte dieselbe Art von Zustandsschätzungsfilteralgorithmus wie oben beschrieben verwendet werden. Alternativ kann ein vereinfachter Algorithmus verwendet werden, beispielsweise ein Tiefpassfilter für die absoluten Winkel und ein angepasster Hochpassfilter für die IMU-Winkel, wodurch das resultierende Signal einen flachen Frequenzgang hat und die absolute Genauigkeit des Marker-basierten Systems beibehalten wird, während es von dem reduzierten Rauschen und der höheren Abtastrate der IMU-Daten profitiert.

Für Echtzeit-Anwendungsfälle wie die nachstehend beschriebene Hindernisvermeidung, bei denen eine schnelle Reaktionszeit wichtig ist, läuft der Zustandsschätzungsfilter beispielsweise nur vorwärts, d.h. in einem kausalen Modus (= nur Informationen aus früheren Messungen verwenden, keine zukünftigen).

Für Anwendungsfälle mit hoher Genauigkeit, wie Interpolation oder Rauschunterdrückung, läuft der Filter beispielsweise so angepasst, dass er nicht kausal ist, wobei auch zukünftige Informationen verwendet werden, um den Zustand an jedem Punkt zu schätzen. Dies kann beispielsweise durch sogenanntes Kalman-Filter "Smoothing" erfolgen, wobei der Filter zusätzlich einmal rückwärts über den Datensatz gefahren wird, um Zustandsinformationen in die entgegengesetzte Richtung zu propagieren.

Ferner kann es vorteilhaft sein, für die absoluten Daten den ungefähren geografischen Standort zu berücksichtigen, um die Erdrotation zu kompensieren.

Gemäss einer Ausführungsform des Vermessungssystems ist das Vermessungssystem dazu konfiguriert basierend auf den mittels der IMU ermittelten Bewegungsdaten eine Annäherung des Messhilfsmittels an ein Hindernis mit bestimmter Position und Form zu erkennen.

Beispielsweise kann das Vermessungssystem Daten aufweisen zu Positionen und Formen von Hindernissen, welche sich bei der zu vermessenden Oberfläche befinden. Diese Daten können zur Position des Messhilfsmittels referenziert werden wodurch die Bewegung des Messhilfsmittels relativ zu den Hindernissen mittels der Bewegungsdaten, die von der IMU ermittelt werden, verfolgbar ist. Basierend auf dieser Verfolgung ist eine Annäherung des Messhilfsmittels an ein Hindernis erkennbar. Basierend auf der Erkennung einer Annäherung kann ein Benutzer des Vermessungssystems vor einer möglichen Kollision gewarnt werden. Dadurch wird eine sichere und effiziente Nutzung des Vermessungssystems ermöglicht.

Gemäss einer Ausführungsform des Vermessungssystems ist das Vermessungssystem dazu konfiguriert das Erkennen einer Annäherung automatisch zu triggern, falls, insbesondere während eines bestimmten Zeitraums, keine Sichtverbindung zwischen dem Reflektor und der Messhilfsmittelerfassungseinheit besteht.

Dadurch kann beispielsweise eine Kollision des Messhilfsmittels auch in Situationen verhindert werden, in denen das Messhilfsmittel nicht unmittelbar beim Vermessen verwendet wird.

Gemäss einer Ausführungsform des Vermessungssystems ist das Vermessungssystem dazu konfiguriert ein Erkennen einer Annäherung über ein optisches und/oder akustisches und/oder haptisches Feedback an einen Benutzer des Messhilfsmittels zu signalisieren.

Gemäss einer Ausführungsform des Vermessungssystems ist das Messhilfsmittel ein Laserscanner, und das Strahlmodul, das Entfernungsmessmodul und die Messhilfsmittelerfassungseinheit sind Teile eines Lasertrackers.

### -KURZE BESCHREIBUNG DER FIGUREN-

Das erfindungsgemässe Vermessungssystem wird nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figur 1: eine Ausführungsform des Vermessungssystems zur Bestimmung von Koordinaten von zu vermessenden Punkten einer Oberfläche;
- Figur 2: eine Ausführungsform eines händisch führbaren Messhilfsmittels zur berührungslosen Abtastung von zu vermessenden Punkten einer Oberfläche;
- Figur 3: eine Ausführungsform eines automatisch geführten Messhilfsmittels zur berührungslosen Abtastung von zu vermessenden Punkten einer Oberfläche;
- Figur 4: eine Ausführungsform eines händisch führbaren Messhilfsmittels zur taktilen Abtastung von zu vermessenden Punkten einer Oberfläche.

### -DETAILLIERTE BESCHREIBUNG DER ERFINDUNG-

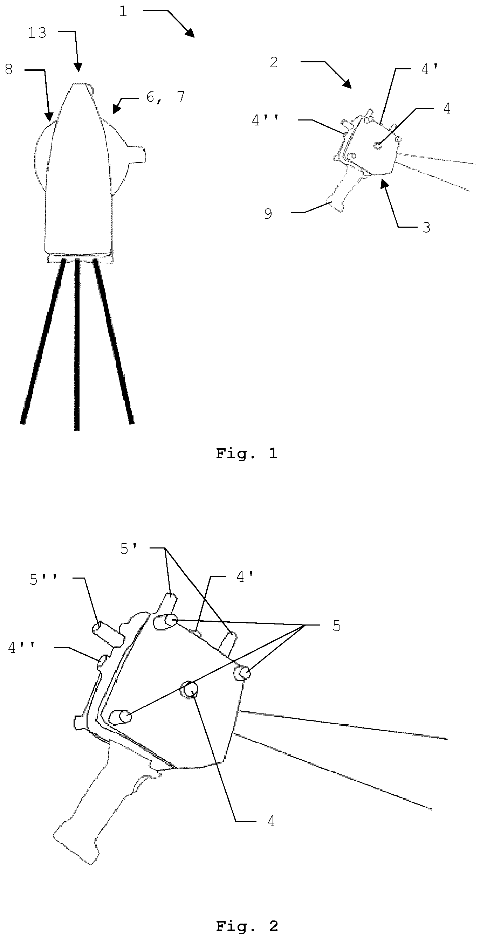

**Figur 1** zeigt ein Vermessungssystem 1 gemäss einer Ausführungsform der Erfindung. Das Vermessungssystem weist ein Messhilfsmittel 2 auf. Das Messhilfsmittel ist dazu ausgelegt händisch geführt zu werden und zu vermessende Punkte einer Oberfläche berührungslos abzutasten. Das Vermessungssystem hat ein Entfernungsmessmodul 6, das dazu ausgelegt ist eine Entfernung zu dem Messhilfsmittel 2 zu messen. Des Weiteren weist das Vermessungssystem 1 ein Strahlmodul 7 auf, das dazu ausgelegt ist richtungsvariabel Erfassungsstrahlung auszusenden. Des Weiteren hat das in Figur 1 gezeigte Vermessungssystem eine ausrichtbare Messhilfsmittelerfassungseinheit 8.

Das in **Figur 1** gezeigte Vermessungssystem 1 zeigt einen Lasertracker 13 und ein Messhilfsmittel, welches als Laserscanner realisiert ist.

Das in **Figur 1** und **Figur 2** gezeigte Messhilfsmittel 2 hat eine im Messhilfsmittel integrierte inertiale Messeinheit (IMU) 3 (nicht gezeigt), welche Bewegungsdaten des Messhilfsmittels ermittelt. Des Weiteren hat das Messhilfsmittel mehrere Reflektoren 4, 4', 4" die einen Reflektor bilden und mehrere Messhilfsmittelmarkierungen 5, 5', 5". Das Messhilfsmittel weist einen Griff 9 auf mittels dessen das Messhilfsmittel händisch führbar ist.

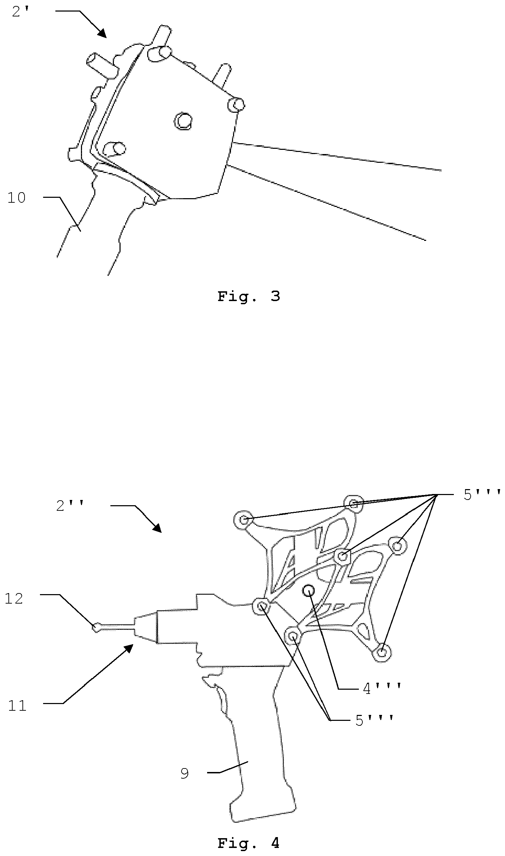

Das in **Figur 3** gezeigte Messhilfsmittel 2', ist dazu ausgelegt automatisch geführt zu werden. Dazu ist es an einem Element 10 einer automatisch geführten Einheit, beispielsweise eines Roboters angebracht.

**Figur 4** zeigt ein Messhilfsmittel 2", das dazu ausgelegt ist händisch geführt zu werden und zu vermessende Punkte einer Oberfläche taktil abzutasten. Dazu hat das Messhilfsmittel einen taktilen Sensoraufsatz 11 mit einer Kugel 12 die mit einem zu vermessenden Punkt in Berührung gebracht wird. Das Messhilfsmittel 2" weist einen Reflektor 4‴ und mehrere Messhilfsmittelmarkierungen 5‴ auf.

Es versteht sich, dass diese dargestellten Figuren nur mögliche Ausführungsbeispiele schematisch darstellen.

## Patentansprüche

1. Vermessungssystem (1) zur lasertrackerbasierten Bestimmung von Koordinaten von zu vermessenden Punkten einer Oberfläche, mit
o einem Messhilfsmittel (2, 2', 2") zur Abtastung der zu vermessenden Punkte der Oberfläche, insbesondere einem Laserscanner, aufweisend
oeine inertiale Messeinheit (3), IMU, zur Ermittlung von Bewegungsdaten des Messhilfsmittels,
oeinen Reflektor (4), und
omehrere Messhilfsmittelmarkierungen (5, 5', 5"), wobei die mehreren Messhilfsmittelmarkierungen in einer bestimmten Positionsrelation zueinander und ein Muster bildend am Messhilfsmittel angeordnet sind, sodass durch das Vermessungssystem mittels des Reflektors eine Position und mittels der Messhilfsmittelmarkierungen eine Orientierung des Messhilfsmittels bestimmbar ist,
o einem Entfernungsmessmodul (6),
o einem Strahlmodul (7) zur richtungsvariablen Aussendung von Erfassungsstrahlung,
o einer ausrichtbaren Messhilfsmittelerfassungseinheit (8), die kommunikativ mit dem Messhilfsmittel verbindbar ist und ein Erfassungssichtfeld aufweist, wobei die Messhilfsmittelerfassungseinheit konfiguriert ist zur
∘Erfassung und Verfolgung des Messhilfsmittels, basierend auf vom Reflektor reflektierter Erfassungsstrahlung,
∘Erfassung der Messhilfsmittelmarkierungen, und
∘Bestimmung von Koordinaten der zu vermessenden Punkte der Oberfläche basierend auf
▪ der Erfassung und Verfolgung des Messhilfsmittels,
▪ der Erfassung der Messhilfsmittelmarkierungen,
▪ einer mittels Entfernungsmessmodul bestimmten Entfernung zum Messhilfsmittel, und
▪ der Abtastung der zu vermessenden Punkte der Oberfläche durch das Messhilfsmittel,
**dadurch gekennzeichnet, dass**
o die Messhilfsmittelerfassungseinheit (8) ferner dazu konfiguriert ist basierend auf von der IMU ermittelten Bewegungsdaten des Messhilfsmittels Koordinaten der zu vermessenden Punkte der Oberfläche zu bestimmen, und
o das Vermessungssystem (1) dazu konfiguriert ist basierend auf von der IMU ermittelten Bewegungsdaten des Messhilfsmittels die Messhilfsmittelerfassungseinheit so auszurichten, dass der Reflektor innerhalb des Erfassungssichtfelds ist.

2. Vermessungssystem nach Anspruch 1, **dadurch gekennzeichnet, dass** das Vermessungssystem so konfiguriert ist, dass
o im Falle, dass der Reflektor (4) innerhalb des Erfassungssichtfelds ist und eine Sichtverbindung zwischen dem Strahlmodul (7), der Messhilfsmittelerfassungseinheit (8) und dem Reflektor besteht, das Messhilfsmittel (2, 2', 2'') zumindest basierend auf vom Reflektor reflektierter Erfassungsstrahlung erfassbar und verfolgbar ist, und
o im Falle, dass entweder der Reflektor ausserhalb des Erfassungssichtfeldes ist oder keine Sichtverbindung zwischen dem Strahlmodul, der Messhilfsmittelerfassungseinheit und dem Reflektor besteht, das Messhilfsmittel basierend auf von der IMU (3) ermittelten Bewegungsdaten des Messhilfsmittels erfassbar und verfolgbar ist.

3. Vermessungssystem nach Anspruch 2, wobei der Reflektor (4) von mehreren Reflektoren (4, 4', 4'') gebildet wird und die mehreren Reflektoren an einem äusseren Bereich des Messhilfsmittels (2, 2', 2") und über diesen verteilt mit einer bestimmten Positionsrelation zueinander angeordnet sind, wobei das Vermessungssystem dazu konfiguriert ist, im Falle, dass auf einen ersten Zustand, in welchem einer der mehreren Reflektoren (4, 4', 4'') innerhalb des Erfassungssichtfelds ist und eine Sichtverbindung zwischen dem Strahlmodul (7), der Messhilfsmittelerfassungseinheit (8) und dem einen der mehreren Reflektoren besteht, ein Zustand folgt in dem entweder der eine der mehreren Reflektoren ausserhalb des Erfassungssichtfeldes ist oder keine Sichtverbindung zwischen dem Strahlmodul, der Messhilfsmittelerfassungseinheit und dem einen der mehreren Reflektoren besteht, die Messhilfsmittelerfassungseinheit basierend auf von der IMU (3) ermittelten Bewegungsdaten des Messhilfsmittels so auszurichten, dass eine Zeitdauer bis einer der mehreren Reflektoren innerhalb des Erfassungssichtfelds ist und eine Sichtverbindung zwischen dem Strahlmodul, der Messhilfsmittelerfassungseinheit und dem einen der mehreren Reflektoren besteht minimiert wird.

4. Vermessungssystem nach einem der Ansprüche 1 bis 3, **dadurch gekennzeichnet, dass** die Messhilfsmittelmarkierungen (5, 5', 5") dazu ausgestaltet sind Lichtstrahlung auszusenden und/oder zu reflektieren.

5. Vermessungssystem nach einem der Ansprüche 1 bis 4, wobei die Messhilfsmittelerfassungseinheit (8) einen Detektor aufweist mit einem strahlungsempfindlichen Sensor, wobei die Messhilfsmittelerfassungseinheit dazu konfiguriert ist mittels des strahlungsempfindlichen Sensors
o das Messhilfsmittel (2, 2', 2") zu erfassen und zu verfolgen, und
o die Messhilfsmittelmarkierungen (5, 5', 5") zu erfassen.

6. Vermessungssystem nach einem der Ansprüche 1 bis 5, **dadurch gekennzeichnet, dass** die Messhilfsmittelerfassungseinheit (8) dazu konfiguriert ist eine Position und Orientierung des Messhilfsmittels alternativ sowohl
o mittels der von der IMU (3) ermittelten Bewegungsdaten des Messhilfsmittels (2, 2', 2"), als auch
o mittels einer Kombination aus
∘mittels des Reflektors (4),
∘mittels der Messhilfsmittelmarkierungen (5, 5', 5") und
∘mittels der von der IMU ermittelten Bewegungsdaten des Messhilfsmittels, zu bestimmen.

7. Vermessungssystem nach einem der Ansprüche 1 bis 6, **dadurch gekennzeichnet, dass** die Messhilfsmittelerfassungseinheit (8) dazu konfiguriert ist basierend auf einem Erfassungskriterium die Orientierung und Position des Messhilfsmittels (2, 2', 2"),
∘ mittels der von der IMU (3) ermittelten Bewegungsdaten des Messhilfsmittels, oder
∘ mittels einer Kombination aus
∘mittels des Reflektors (4),
∘mittels der Messhilfsmittelmarkierungen (5, 5', 5'') und
∘mittels der von der IMU ermittelten Bewegungsdaten des Messhilfsmittels, zu bestimmen.

8. Vermessungssystem nach Anspruch 7, **dadurch gekennzeichnet, dass** das Erfassungskriterium mindestens einen der folgenden Zustände betrifft
o das Messhilfsmittel (2, 2', 2") ist vollständig mittels des Reflektors (4) und der Messhilfsmittelmarkierungen (5, 5', 5") erfassbar,
o das Messhilfsmittel ist zumindest teilweise mittels des Reflektors und der Messhilfsmittelmarkierungen erfassbar,
o das Messhilfsmittel ist zumindest teilweise mittels des Reflektors oder der Messhilfsmittelmarkierungen erfassbar, und
o es besteht keine Sichtverbindung zwischen dem Reflektor und der Messhilfsmittelerfassungseinheit und Sichtlinien zwischen den Messhilfsmittelmarkierungen und der Messhilfsmittelerfassungeinheit sind unterbrochen.

9. Vermessungssystem nach einem der Ansprüche 1 bis 8, **dadurch gekennzeichnet, dass** die Messhilfsmittelerfassungseinheit (8) dazu konfiguriert ist die Position und/oder Orientierung des Messhilfsmittels (2, 2', 2")
o mittels Reflektor (4) und/oder Messhilfsmittelmarkierungen (5, 5', 5") zu ersten Zeitpunkten, und
o mittels der von der IMU (3) ermittelten Bewegungsdaten zu zweiten Zeitpunkten zu bestimmen, wobei zumindest ein Teil der zweiten Zeitpunkte zeitlich zwischen den ersten Zeitpunkten liegt.

10. Vermessungssystem nach einem der Ansprüche 1 bis 9, wobei die Messhilfsmittelerfassungseinheit (8) dazu konfiguriert ist die Orientierung des Messhilfsmittels (2, 2', 2") mittels der Messhilfsmittelmarkierungen (5, 5', 5") und der von der IMU (3) ermittelten Bewegungsdaten zu bestimmen, wobei die Messhilfsmittelerfassungseinheit (8) dazu konfiguriert ist die Orientierung basierend auf
o über ein erstes Zeitintervall gemittelten Messwerten zur Bestimmung der Orientierung mittels Messhilfsmittelmarkierungen, und
o über ein zweites Zeitintervall gemittelten Messwerten zur Bestimmung der Orientierung mittels der von der IMU ermittelten Bewegungsdaten zu bestimmen.

11. Vermessungssystem nach einem der Ansprüche 1 bis 10, **dadurch gekennzeichnet, dass** die Messhilfsmittelerfassungseinheit (8) ferner dazu konfiguriert ist mittels der IMU (3) ermittelte Bewegungsdaten basierend auf mittels des Reflektors (4) und der Messhilfsmittelmarkierungen (5, 5', 5") bestimmten Positionen und Orientierungen fortlaufend zu kalibrieren.

12. Vermessungssystem nach einem der Ansprüche 1 bis 11, **dadurch gekennzeichnet, dass** das Vermessungssystem dazu konfiguriert ist basierend auf den mittels der IMU (3) ermittelten Bewegungsdaten eine Annäherung des Messhilfsmittels (2, 2', 2") an ein Hindernis mit bestimmter Position und Form zu erkennen.

13. Vermessungssystem nach Anspruch 12, **dadurch gekennzeichnet, dass** das Vermessungssystem dazu konfiguriert ist das Erkennen einer Annäherung automatisch zu triggern, falls, insbesondere während eines bestimmten Zeitraums, keine Sichtverbindung zwischen dem Reflektor (4), dem Strahlmodul und der Messhilfsmittelerfassungseinheit (8) besteht.

14. Vermessungssystem nach Anspruch 13, **dadurch gekennzeichnet, dass** das Vermessungssystem dazu konfiguriert ist ein Erkennen einer Annäherung über ein optisches und/oder akustisches und/oder haptisches Feedback an einen Benutzer des Messhilfsmittels (2, 2', 2") zu signalisieren.

15. Vermessungssystem nach einem der Ansprüche 1 bis 14, **dadurch gekennzeichnet, dass**
o das Messhilfsmittel (2, 2', 2") ein Laserscanner ist, und
o das Strahlmodul, das Entfernungsmessmodul und die Messhilfsmittelerfassungseinheit (8) Teile eines Lasertrackers sind (13).

## Claims

1. Surveying system (1) for the laser-tracker-based determination of coordinates of points of a surface which are to be surveyed, having
∘ a measurement aid (2, 2', 2") for sampling the points of the surface which are to be surveyed, in particular a laser scanner, comprising
oan inertial measurement unit (3), IMU, for determining movement data of the measurement aid,
oa reflector (4), and
oa plurality of measurement aid markings (5, 5', 5"),
the plurality of measurement aid markings being arranged in a determined position relation with respect to one another and so as to form a pattern on the measurement aid, so that by using the surveying system, a position can be determined by means of the reflector and an orientation of the measurement aid can be determined by means of the measurement aid markings,
o a distance measurement module (6),
o a beam module (7) for variable-direction emission of acquisition radiation,
o an alignable measurement aid acquisition unit (8), which is communicatively connectable to the measurement aid and has an acquisition field of view, the measurement aid acquisition unit being configured to
∘acquire and track the measurement aid on the basis of acquisition radiation reflected by the reflector,
∘acquire the measurement aid markings, and
∘determine coordinates of the points of the surface which are to be surveyed, on the basis of
▪ the acquisition and tracking of the measurement aid,
▪ the acquisition of the measurement aid markings,
▪ a distance to the measurement aid, determined by means of the distance measurement module, and
▪ the sampling by the measurement aid of the points of the surface which are to be surveyed,
**characterized in that**
o the measurement aid acquisition unit (8) is furthermore configured to determine coordinates of the points of the surface which are to be surveyed, on the basis of measurement aid movement data determined by the IMU, and
o the surveying system (1) is configured to align the measurement aid acquisition unit on the basis of measurement aid movement data determined by the IMU, in such a way that the reflector is inside the acquisition field of view.

2. Surveying system according to Claim 1, **characterized in that** the surveying system is configured in such a way that
o in the event that the reflector (4) is inside the acquisition field of view and there is a line of sight between the beam module (7), the measurement aid acquisition unit (8) and the reflector, the measurement aid (2, 2', 2") can be acquired and tracked at least on the basis of acquisition radiation reflected by the reflector, and
o in the event that either the reflector is outside the acquisition field of view or there is no line of sight between the beam module, the measurement aid acquisition unit and the reflector, the measurement aid can be acquired and tracked on the basis of measurement aid movement data determined by the IMU (3) .

3. Surveying system according to Claim 2, wherein the reflector (4) is formed by a plurality of reflectors (4, 4', 4'') and the plurality of reflectors are arranged on an outer region of the measurement aid (2, 2', 2") and distributed thereover with a determined position relation with respect to one another,
wherein the surveying system is configured, in the event that a first state in which one of the plurality of reflectors (4, 4', 4") is inside the acquisition field of view and there is a line of sight between the beam module (7), the measurement aid acquisition unit (8) and one of the plurality of reflectors, is tracked by a state in which either the one of the plurality of reflectors is outside the acquisition field of view or there is no line of sight between the beam module, the measurement aid acquisition unit and the one of the plurality of reflectors, to align the measurement aid acquisition unit on the basis of measurement aid movement data determined by the IMU (3), in such a way that a length of time until one of the plurality of reflectors is inside the acquisition field of view and there is a line of sight between the beam module, the measurement aid acquisition unit and the one of the plurality of reflectors is minimized.

4. Surveying system according to any one of Claims 1 to 3, **characterized in that** the measurement aid markings (5, 5', 5'') are configured to emit and/or to reflect light radiation.

5. Surveying system according to any one of Claims 1 to 4,
wherein the measurement aid acquisition unit (8) comprises a detector having a radiation-sensitive sensor,
wherein the measurement aid acquisition unit is configured to
o acquire and track the measurement aid (2, 2', 2"), and
o acquire the measurement aid markings (5, 5', 5'') by means of the radiation-sensitive sensor.

6. Surveying system according to any one of Claims 1 to 5, **characterized in that** the measurement aid acquisition unit (8) is configured to determine a position and orientation of the measurement aid alternatively both
o by means of the measurement aid movement data (2, 2', 2") determined by the IMU (3),
and
o by means of a combination of
oby means of the reflector (4),
oby means of the measurement aid markings (5, 5', 5'') and
oby means of the measurement aid movement data determined by the IMU.

7. Surveying system according to any one of Claims 1 to 6, **characterized in that** the measurement aid acquisition unit (8) is configured to determine the orientation and position of the measurement aid (2, 2', 2") on the basis of an acquisition criterion,
o by means of the measurement aid movement data determined by the IMU (3) or
o by means of a combination of
oby means of the reflector (4),
oby means of the measurement aid markings (5, 5', 5'') and
oby means of the measurement aid movement data determined by the IMU.

8. Surveying system according to Claim 7, **characterized in that** the acquisition criterion relates to at least one of the following states
o the measurement aid (2, 2', 2") is fully acquirable by means of the reflector (4) and the measurement aid markings (5, 5', 5"),
o the measurement aid is at least partially acquirable by means of the reflector and the measurement aid markings,
o the measurement aid is at least partially acquirable by means of the reflector or the measurement aid markings, and
o there is no line of sight between the reflector and the measurement aid acquisition unit and sightlines between the measurement aid markings and the measurement aid acquisition unit are interrupted.

9. Surveying system according to any one of Claims 1 to 8, **characterized in that** the measurement aid acquisition unit (8) is configured to determine the position and/or orientation of the measurement aid (2, 2', 2'')
o by means of the reflector (4) and/or measurement aid markings (5, 5', 5'') at first instants, and
o by means of the movement data determined by the IMU (3) at second instants,
at least some of the second instants lying chronologically between the first instants.

10. Surveying system according to any one of Claims 1 to 9,
wherein the measurement aid acquisition unit (8) is configured to determine the orientation of the measurement aid (2, 2', 2'') by means of the measurement aid markings (5, 5', 5'') and the movement data determined by the IMU (3),
wherein the measurement aid acquisition unit (8) is configured to determine the orientation on the basis of
o measurement values averaged over a first time interval for determining the orientation by means of measurement aid markings, and
o measurement values averaged over a second time interval for determining the orientation by means of the movement data determined by the IMU.

11. Surveying system according to any one of Claims 1 to 10, **characterized in that** the measurement aid acquisition unit (8) is furthermore configured to calibrate movement data determined by means of the IMU (3) continuously on the basis of positions and orientations determined by means of the reflector (4) and the measurement aid markings (5, 5', 5").

12. Surveying system according to any one of Claims 1 to 11, **characterized in that** the surveying system is configured to identify an approach of the measurement aid (2, 2', 2") to an obstacle with a particular position and shape on the basis of the movement data determined by means of the IMU (3) .

13. Surveying system according to Claim 12, **characterized in that** the surveying system is configured to automatically trigger the identification of an approach if, in particular during a determined period of time, there is no line of sight between the reflector (4), the beam module and the measurement aid acquisition unit (8).

14. Surveying system according to Claim 13, **characterized in that** the surveying system is configured to signal identification of an approach by means of an optical and/or acoustic and/or haptic feedback to a user of the measurement aid (2, 2', 2").

15. Surveying system according to any one of Claims 1 to 14, **characterized in that**
o the measurement aid (2, 2', 2'') is a laser scanner, and
o the beam module, the distance measurement module and the measurement aid acquisition unit (8) are parts of a laser tracker (13).

## Revendications

1. Système de mesure (1) destiné à la détermination basée sur une poursuite laser de coordonnées de points à mesurer d'une surface, doté
- d'un moyen auxiliaire de mesure (2, 2', 2") destiné à balayer les points à mesurer de la surface, en particulier d'un scanner laser, comportant
o une unité de mesure inertielle (3), IMU, destinée à déterminer des données de déplacement du moyen auxiliaire de mesure,
o un réflecteur (4), et
o plusieurs marquages de moyen auxiliaire de mesure (5, 5' ,5"),
dans lequel les plusieurs marquages de moyen auxiliaire de mesure sont disposés sur le moyen auxiliaire de mesure en formant un motif et avec une relation spatiale mutuelle déterminée, de sorte qu'une position du moyen auxiliaire de mesure est déterminable par le système de mesure au moyen du réflecteur et une orientation du moyen auxiliaire de mesure est déterminable par le système de mesure au moyen des marquages de moyen auxiliaire de mesure,
- d'un module télémétrique (6),
- d'un module de rayonnement (7) destiné à l'émission orientable d'un rayonnement de détection,
- d'une unité orientable de détection de moyen auxiliaire de mesure (8), laquelle peut être reliée en communication au moyen auxiliaire de mesure et comporte un champ visuel de détection, dans lequel l'unité orientable de détection de moyen auxiliaire de mesure est configurée pour
o la détection et la poursuite du moyen auxiliaire de mesure, sur la base du rayonnement de détection réfléchi par le réflecteur,
o la détection des marquages de moyen auxiliaire de mesure, et
o la détermination de coordonnées des points à mesurer de la surface sur la base
□ de la détection et de la poursuite du moyen auxiliaire de mesure,
□ de la détection des marquages de moyen auxiliaire de mesure,
□ d'une distance par rapport au moyen auxiliaire de mesure déterminée au moyen du module télémétrique, et
□ du balayage des points à mesurer de la surface par le moyen auxiliaire de mesure, **caractérisé en ce que**
- l'unité de détection de moyen auxiliaire de mesure (8) est en outre configurée de façon à déterminer les coordonnées des points à mesurer de la surface sur la base des données de déplacement du moyen auxiliaire de mesure déterminées par l'IMU, et
- le système de mesure (1) est configuré de façon à orienter l'unité de détection de moyen auxiliaire de mesure de sorte que le réflecteur est à l'intérieur du champ visuel de détection sur la base des données de déplacement du moyen auxiliaire de mesure déterminées par l'IMU.

2. Système de mesure selon la revendication 1, **caractérisé en ce que** le système de mesure est configuré de telle sorte que
- dans le cas où le réflecteur (4) est à l'intérieur du champ visuel de détection et il existe un contact visuel entre le module de rayonnement (7), l'unité de détection de moyen auxiliaire de mesure (8) et le réflecteur, le moyen auxiliaire de mesure (2, 2', 2") peut être détecté et suivi au moins sur la base du rayonnement de détection réfléchi par le réflecteur, et
- dans le cas où, ou bien le réflecteur (4) est à l'extérieur du champ visuel de détection ou bien il n'existe aucun contact visuel entre le module de rayonnement, l'unité de détection de moyen auxiliaire de mesure et le réflecteur, le moyen auxiliaire de mesure peut être détecté et suivi sur la base des données de déplacement du moyen auxiliaire de mesure déterminées par l'IMU (3).

3. Système de mesure selon la revendication 2, dans lequel le réflecteur (4) est formé de plusieurs réflecteurs (4, 4', 4") et les plusieurs réflecteurs sont disposés sur une zone externe du moyen auxiliaire de mesure (2, 2', 2") et répartis sur celle-ci avec une relation spatiale mutuelle déterminée, dans lequel le système de mesure est configuré de façon à, dans le cas où à un premier état où un des plusieurs réflecteurs (4, 4', 4") est à l'intérieur du champ visuel de détection et il existe un contact visuel entre le module de rayonnement (7), l'unité de détection de moyen auxiliaire de mesure (8) et l'un des plusieurs réflecteurs, succède un état où l'un des plusieurs réflecteurs est à l'extérieur du champ visuel de détection ou alors il n'existe aucun contact visuel entre le module de rayonnement, l'unité de détection de moyen auxiliaire de mesure et l'un des plusieurs réflecteurs, orienter l'unité de détection de moyen auxiliaire de mesure sur la base des données de déplacement du moyen auxiliaire de mesure déterminées par l'IMU (3) de telle sorte qu'une durée jusqu'à ce qu'un des plusieurs réflecteurs soit à l'intérieur du champ visuel de détection et qu'il existe un contact visuel entre le module de rayonnement, l'unité de détection de moyen auxiliaire de mesure et l'un des plusieurs réflecteurs est minimisée.

4. Système de mesure selon l'une des revendications 1 à 3, **caractérisé en ce que** les marquages de moyen auxiliaire de mesure (5, 5' ,5") sont conformés de façon à émettre et/ou réfléchir le rayonnement lumineux.

5. Système de mesure selon l'une des revendications 1 à 4, dans lequel l'unité de détection de moyen auxiliaire de mesure (8) comporte un détecteur doté d'un capteur sensible au rayonnement, dans lequel l'unité de détection de moyen auxiliaire de mesure est configurée de façon à, au moyen du capteur sensible au rayonnement
- détecter et suivre le moyen auxiliaire de mesure (2, 2', 2"), et
- détecter les marquages de moyen auxiliaire de mesure (5, 5', 5").

6. Système de mesure selon l'une des revendications 1 à 5, **caractérisé en ce que** l'unité de détection de moyen auxiliaire de mesure (8) est configurée de façon à déterminer alternativement une position et une orientation du moyen auxiliaire de mesure aussi bien au moyen
- des données de déplacement du moyen auxiliaire de mesure (2, 2', 2") déterminées par l'IMU (3), qu'au moyen
- d'une combinaison
o du réflecteur (4),
o des marquages de moyen auxiliaire de mesure (5, 5', 5") et
o des données de déplacement du moyen auxiliaire de mesure déterminées par l'IMU.

7. Système de mesure selon l'une des revendications 1 à 6, **caractérisé en ce que** l'unité de détection de moyen auxiliaire de mesure (8) est configurée de façon à déterminer la position et l'orientation du moyen auxiliaire de mesure (2, 2', 2") sur la base d'un critère de détection,
- au moyen des données de déplacement du moyen auxiliaire de mesure déterminées par l'IMU (3), ou
- au moyen d'une combinaison de
o du réflecteur (4),
o des marquages de moyen auxiliaire de mesure (5, 5', 5") et
o des données de déplacement du moyen auxiliaire de mesure déterminées par l'IMU.

8. Système de mesure selon la revendication 7, **caractérisé en ce que** le critère de détection concerne au moins un des états suivants
- le moyen auxiliaire de mesure (2, 2', 2") est entièrement détectable au moyen du réflecteur (4) et des marquages de moyen auxiliaire de mesure (5, 5', 5") ,
- le moyen auxiliaire de mesure est au moins partiellement détectable au moyen du réflecteur et des marquages de moyen auxiliaire de mesure,
- le moyen auxiliaire de mesure est au moins partiellement détectable au moyen du réflecteur ou des marquages de moyen auxiliaire de mesure, et
- il n'existe aucun contact visuel entre le réflecteur et l'unité de détection de moyen auxiliaire de mesure et les lignes de mire entre les marquages de moyen auxiliaire de mesure et l'unité de détection de moyen auxiliaire de mesure sont interrompues.

9. Système de mesure selon l'une des revendications 1 à 8, **caractérisé en ce que** l'unité de détection de moyen auxiliaire de mesure (8) est configurée de façon à déterminer la position et l'orientation du moyen auxiliaire de mesure (2, 2', 2")
- au moyen du réflecteur (4) et/ou des marquages de moyen auxiliaire de mesure (5, 5', 5") à des premiers instants, et
- au moyen des données de déplacement déterminées par l'IMU (3) à des deuxièmes instants, dans lequel au moins une partie des deuxièmes instants est chronologiquement entre les premiers instants.

10. Système de mesure selon l'une des revendications 1 à 9, dans lequel l'unité de détection de moyen auxiliaire de mesure (8) est configurée de façon à déterminer l'orientation du moyen auxiliaire de mesure (2, 2', 2") au moyen des marquages de moyen auxiliaire de mesure (5, 5', 5") et des données de déplacement déterminées par l'IMU (3), dans lequel l'unité de détection de moyen auxiliaire de mesure (8) est configurée de façon à déterminer l'orientation sur la base
- de valeurs de mesure moyennées sur un premier intervalle de temps pour la détermination de l'orientation au moyen des marquages de moyen auxiliaire de mesure, et
- de valeurs de mesure moyennées sur un deuxième intervalle de temps pour la détermination de l'orientation au moyen des données de déplacement déterminées par l'IMU.

11. Système de mesure selon l'une des revendications 1 à 10, **caractérisé en ce que** l'unité de détection de moyen auxiliaire de mesure (8) est en outre configurée de façon à s'étalonner en continu au moyen des données de déplacement déterminées par l'IMU (3) sur la base de positions et d'orientations déterminées au moyen du réflecteur (4) et des marquages de moyen auxiliaire de mesure (5, 5', 5").

12. Système de mesure selon l'une des revendications 1 à 11, **caractérisé en ce que** le système de mesure est configuré de façon à reconnaître que le moyen auxiliaire de mesure (2, 2', 2") s'approche d'un obstacle de position et de forme déterminées, au moyen des données de déplacement déterminées par l'IMU (3).

13. Système de mesure selon la revendication 12, **caractérisé en ce que** le système de mesure est configuré de façon à déclencher automatiquement la reconnaissance d'approche dans le cas où il n'existe aucun contact visuel entre le réflecteur (4), le module de rayonnement et l'unité de détection de moyen auxiliaire (8), en particulier pendant un intervalle de temps déterminé.

14. Système de mesure selon la revendication 13, **caractérisé en ce que** le système de mesure est configuré de façon à signaler une reconnaissance d'approche à un utilisateur du moyen auxiliaire de mesure (2, 2', 2") par le biais d'un retour optique et/ou acoustique et/ou haptique.

15. Système de mesure selon l'une des revendications 1 à 14, **caractérisé en ce que**
- le moyen auxiliaire de mesure (2, 2', 2") est un scanner laser, et
- le module de rayonnement, le module télémétrique et l'unité de détection de moyen auxiliaire de mesure (8) sont des éléments d'une poursuite laser (13) .
